# FASCICULE DE BREVET EUROPEEN

(11) **EP 0 867 318 B1**
(45) Date de publication et mention de la délivrance du brevet: **15.05.2002**
(21) Numéro de dépôt: 98400480.4
(22) Date de dépôt: 27.02.1998
(51) Int. Cl.: B60G 21/05, B60G 11/44

(54) **Perfectionnement à un essieu arrière pour véhicule automobile du type à traverse déformable en torsion et à ressorts de suspension sensiblement verticaux**
Verbesserungen an einer Hinterachse eines Kraftfahrzeuges mit einem torsionsverformbaren Verbundlenker und vertikalen Aufhängungsfedern
Improvements in the rear axle of a motor vehicle having a torsionally deformable cross beam and vertical suspension springs

(30) Priorité: 28.03.1997 FR 9703882
(43) Date de publication de la demande: 30.09.1998
(73) Titulaire: AUTOMOBILES PEUGEOT, 75116 Paris (FR); AUTOMOBILES CITROEN, 92200 Neuilly-sur-Seine (FR)
(72) Inventeur: Galtier, Lucien, 91390 Morsang sur Orge (FR)
(74) Mandataire: Thinat, Michel

(56) Documents cités:
- EP-A- 0 249 539
- WO-A-94/18019
- FR-A- 2 574 028
- GB-A- 2 222 987
- US-A- 4 027 898
- US-A- 5 427 404

## Description

La présente invention concerne un essieu arrière pour véhicule automobile.

On connaît des essieux arrière du type comprenant deux bras longitudinaux opposés portant les roues arrière et reliés entre eux par une traverse déformable en torsion de sorte que la traverse et les bras longitudinaux ont une configuration s'apparentant à une forme en H. La suspension de la caisse du véhicule est généralement assurée par deux ressorts métalliques hélicoïdaux autorisant des mouvements relatifs entre leur appui sur la caisse et celui sur chacun des deux bras longitudinaux.

Cependant, l'utilisation de tels ressorts de suspension dans ces trains arrière connus pose des problèmes d'encombrement et de poids.

WO 94 18019 décrit un essieu arrière pour véhicule automobile comprenant les caractéristiques du préambule de la revendication 1.

Cependant, les points d'appui et d'ancrage des extrémités de chaque ressort de suspension à lame de cet essieu connu doivent être soigneusement définis afin que le ressort à lame puisse travailler dans de bonnes conditions avec un bon maintien et guidage de celui-ci dans ses mouvements, aussi bien lorsque le véhicule est au repos ou en pompage arrière, où les axes des points d'appui sont parallèles aux axes de rotation des roues arrières du véhicule, que lorsque le véhicule est en dévers, où les axes des points d'appui ne sont alors plus parallèles à cause de la prise de contre-carrossage de la roue extérieure au virage.

FR-A-2 574 028 et US-A-5 427 404 décrivent chacun un bras de suspension comportant un ressort à lame en forme de C.

Cependant, ces deux documents antérieurs ne révèlent pas un agencement d'essieu arrière dont les ressorts à lame sont montés de façon à assurer un guidage et une isolation des mouvements de la lame tout en permettant des mouvements relatifs en cône et en torsion.

La présente invention a pour but d'éliminer les inconvénients ci-dessus des essieux arrière connus.

A cet effet, l'invention propose un essieu arrière pour véhicule automobile, comprenant les caractéristiques énoncées dans la partie caractérisante de la revendication 1.

Chaque ressort s'étend approximativement dans un plan vertical longitudinal du véhicule en étant traversé par la partie arrière du bras associé inclinée par rapport à ce plan vertical.

Chaque ressort est en matière synthétique composite. L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :

La figure 1 est une vue arrière en élévation d'un demi-essieu arrière d'un véhicule automobile conforme à l'invention.

La figure 2 est une vue de dessus de l'essieu arrière suivant la flèche II de la figure 1 avec coupe partielle de l'articulation à la caisse du véhicule de la partie avant du bras longitudinal correspondant de l'essieu.

La figure 3 est une vue en coupe suivant la ligne brisée III-III de la figure 2.

La figure 4 est une vue en coupe suivant la ligne IV-IV de la figure 2.

La figure 5 est une vue en coupe suivant la ligne V-V de la figure 4.

La figure 6 est une vue en coupe suivant la ligne VI-VI de la figure 4.

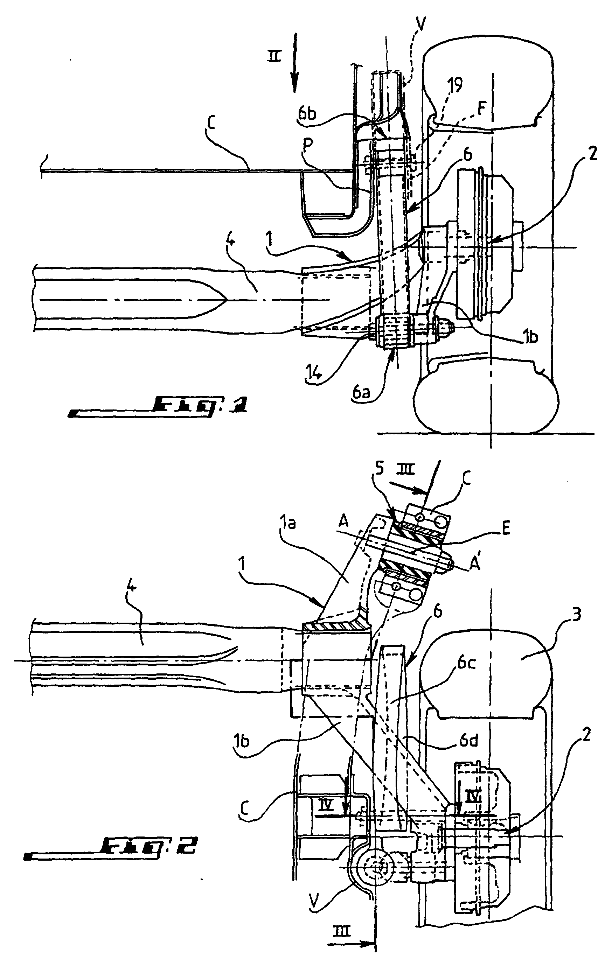

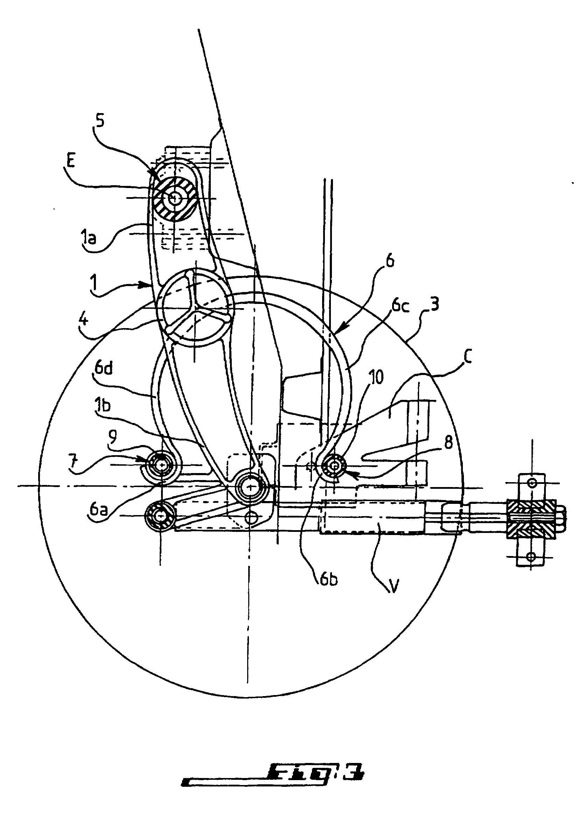

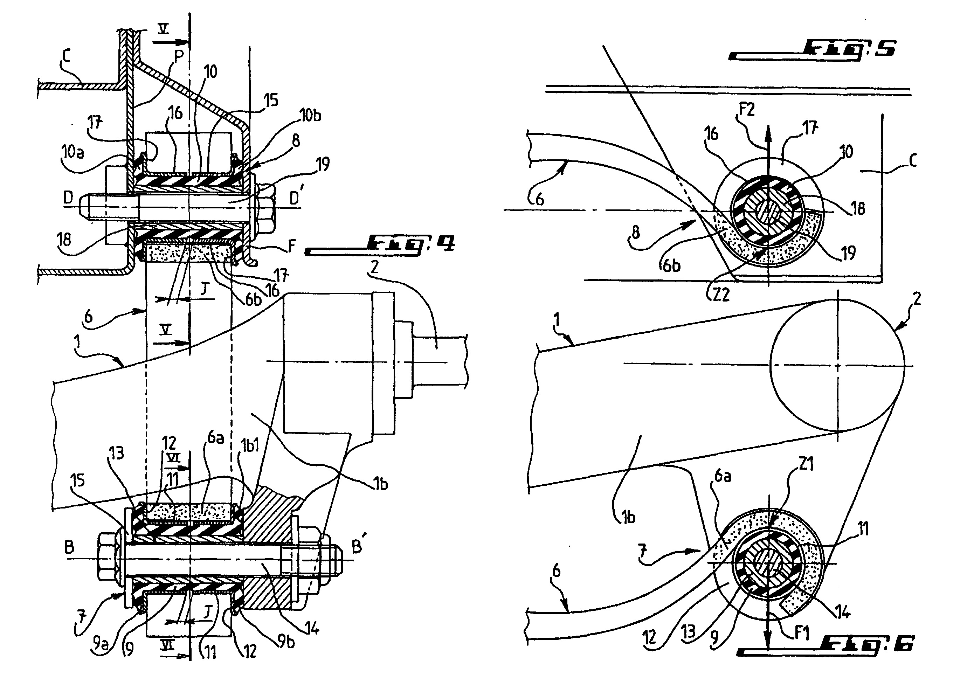

L'essieu arrière pour véhicule automobile tel que représenté notamment aux figures 1 à 3 comprend deux bras longitudinaux opposés 1 de support des fusées 2 des roues arrière 3 du véhicule, seul le bras longitudinal de droite étant représenté, et reliés entre eux par une traverse 4 déformable en torsion de façon à obtenir un ensemble traverse 4 et bras longitudinaux 1 présentant en plan sensiblement la forme d'un H. Comme représenté, la traverse 4 est liée à ses extrémités aux deux bras longitudinaux 1 par emmanchement rigide, mais peut être liée à ceux-ci par soudage, vissage ou tout autre moyen approprié. Cette traverse peut présenter en section une forme en Y, en U, en V ou tout autre forme, avec adjonction éventuelle d'une barre anti-dévers.

Les deux bras longitudinaux 1 sont reliés à la caisse C du véhicule, à leurs parties la en avant de l'axe de rotation des roues arrière et de la traverse 4, par deux articulations élastiques 5 dont les axes d'articulation A-A' passant par les centres E de ces articulations sont contenus dans un même plan horizontal. La figure 2 montre que chaque axe d'articulation A-A' est incliné et les droites prolongeant les deux axes A-A' concourent au plan médian vertical longitudinal du véhicule à l'avant du plan vertical transversal contenant les centres E des deux articulations 5. La partie arrière 1b de chaque bras longitudinal 1 supporte la fusée 2 de roue arrière correspondante 3.

Chaque bras longitudinal 1 a sa partie de bras arrière 1b reliée à la caisse C du véhicule par un ressort sensiblement vertical 6 permettant à la caisse de supporter des charges verticales. La référence V désigne un vérin hydraulique d'amortissement monté entre la caisse C et la partie de bras arrière 1b de façon usuelle.

Selon l'invention, chaque ressort 6 est constitué d'une lame élastique sensiblement en forme de C à section rectangulaire, de préférence en une matière synthétique composite, s'étendant approximativement dans un plan vertical longitudinal du véhicule et a ses deux extrémités inférieure 6a et supérieure 6b qui sont maintenues directement et respectivement sur deux articulations inférieure 7 solidaire de la partie arrière 1b du bras longitudinal correspondant et supérieure 8 solidaire de la caisse C du véhicule comme cela ressort mieux de la figure 4. Les axes B-B' et D-D' respectivement des deux articulations 7 et 8 sont perpendiculaires au plan moyen de la lame élastique 6. La partie arrière 1b de chaque bras longitudinal passe entre les deux branches 6c, 6d de la lame élastique correspondante 6 et chaque extrémité 6a, 6b de cette lame est courbée vers l'extérieur du C de manière à entourer partiellement un manchon élastique 9, 10 agencé sur l'articulation correspondante 7, 8 comme cela ressort mieux des figures 4 à 6. Plus précisément, l'extrémité 6a de la lame élastique 6 est partiellement en appui sur deux bagues métalliques 11 enveloppant le manchon élastique 9 coaxialement à celui-ci et comportant chacune un flasque 12 s'étendant perpendiculairement à l'axe longitudinal de la bague 11. Ces deux flasques 12 maintiennent bilatéralement l'extrémité 6a de la lame 6 en venant en appui respectivement sur les deux flancs parallèles de cette extrémité comme on le verra ultérieurement. Le manchon élastique 9 est monté coaxialement sur une entretoise tubulaire 13 de l'articulation 7 solidaire de la partie arrière 1b du bras longitudinal 1 par un boulon de fixation 14 traversant l'entretoise 13 et l'extrémité de la partie arrière 1b de façon à serrer l'entretoise 13 entre la tête du boulon 14, par l'intermédiaire d'une rondelle 15, et une face dressée 1b1 de la partie arrière 1b sensiblement parallèle à l'axe longitudinal du véhicule. Le manchon élastique 9 comporte deux collerettes extrêmes 9a, 9b et sa largeur à l'état libre est supérieure à la longueur de l'entretoise 13 de façon qu'après serrage du boulon 14, les collerettes 9a, 9b sont comprimées d'une part entre la rondelle 15 et le flasque 12 correspondant d'une bague 11 et d'autre part entre la face dressée 1b1 et le flasque 12 de l'autre bague 11. La compression des collerettes 9a, 9b permet d'exercer sur les flasques 12 un effort axial de maintien des collerettes sur les flancs correspondants de l'extrémité 6a de la lame 6 et donc des bagues 11. A cet égard, un jeu J entre les deux extrémités en vis-à-vis respectivement des deux bagues 11 doit être observé une fois que l'extrémité 6a de la lame 6 est maintenue bilatéralement par les deux flasques 12 de ces bagues. Ainsi, après montage de l'extrémité 6a de la lame 6, les collerettes 9a, 9b du manchon élastique 9 empêchent la lame de pivoter autour d'un axe passant par les centres respectifs des articulations 7 et 8, et par suite de heurter les pièces environnantes pendant les débattements verticaux du véhicule. De plus, le manchon élastique 9 permet d'isoler phonétiquement la caisse du véhicule des bruits gênant susceptibles d'être produits par la roue arrière correspondante. Afin d'assurer une meilleure tenue dans le temps, le manchon élastique 9 est fixé par adhérisation sur l'entretoise 13 et aux deux bagues 11 concentriques à l'entretoise 13.

L'autre extrémité courbée 6b de chaque lame élastique 6 est solidarisée à la caisse C du véhicule par l'articulation 8 de la même manière que l'extrémité 6a de sorte qu'il est inutile de décrire de façon détaillée les éléments assurant cette fixation et fonctionnant de la même manière que ceux de l'extrémité 6a.

Ainsi, les deux bagues 16 et leurs flasques respectifs 17, l'entretoise tubulaire 18, les collerettes 10a, 10b du manchon élastique 10 de l'articulation 8 assurent le maintien bilatéral de l'extrémité 6b de la lame 6 et le maintien axial des deux bagues 16 lorsque la vis de fixation 19 traversant l'entretoise 18 serre cette dernière entre une paroi longitudinale P de la caisse C et un flasque F de cette caisse parallèle à la paroi P.

Lorsqu'une charge est appliquée sur la caisse du véhicule à l'arrière de celui-ci, une demi-charge verticale arrière de caisse est appliquée sur chaque extrémité 6b d'une lame élastique 6 et une augmentation de cette charge tend à rapprocher les extrémités 6a, 6b de la lame. Autrement dit, lors des débattements verticaux de la caisse C du véhicule, les deux extrémités 6a, 6b de la lame élastique 2, tout en exerçant sur les articulations 7 et 8 des forces de sens opposés F1 et F2, se rapprochent ou s'éloignent plus ou moins, produisant un débattement angulaire des zones d'appui Z1 et Z2 (figures 5 et 6) des extrémités 6a et 6b de la lame 6 sur respectivement sur les bagues 11 et 16. Ces zones d'appui Z1 et Z2 amènent ainsi, par adhérence et frottement, les bagues 11 et 16 à pivoter autour des axes B-B' et D-D' sensiblement parallèles à l'axe de rotation des roues arrière correspondantes avec déformation concomitante des manchons élastiques 9, 10 permettant des mouvements relatifs en cone et en torsion entre les bagues 11, 16 et les entretoises 13, 18.

La lame élastique en forme de C constituant chaque ressort de suspension de l'essieu arrière de l'invention permet, par rapport aux essieux arrière connus, non seulement un gain de poids, mais également un gain de volume pour loger les conduits d'échappement, la roue de secours, etc. du véhicule. De plus, le montage en série de chaque ressort de suspension de l'invention est simple et s'organise de la même façon qu'un ressort traditionnel en considérant le fait que les articulations 7, 8 sont prémontées sur la caisse et le train arrière du véhicule.

## Revendications

1. Essieu arrière pour véhicule automobile, comprenant deux bras longitudinaux opposés (1) reliés entre eux par une traverse déformable en torsion (4) et chacun à la caisse (C) du véhicule par un ressort sensiblement vertical (6), chaque ressort étant constitué d'une lame élastique en forme de C (6) dont les deux extrémités inférieure (6a) et supérieure (6b) sont maintenues directement et respectivement sur deux articulations (7, 8) chacune d'axe perpendiculaire au plan moyen du ressort (6) et solidaires l'une (7) du bras associé (1) et l'autre (8) de la caisse (C), **caractérisé en ce que** chaque extrémité (6a, 6b) du ressort (6) est courbée vers l'extérieur du C de manière à entourer partiellement un manchon élastique (9, 10) agencé sur l'articulation correspondante (7, 8) et subissant une déformation notamment en torsion lors des débattements verticaux de la caisse (C) du véhicule, et est maintenue bilatéralement par deux flasques (12 ; 17) respectivement de deux bagues (11 ; 16) enveloppant le manchon élastique correspondant (9 ; 10) et étant elles-mêmes maintenues axialement par des collerettes d'extrémité (9a, 9b ; 10a, 10b) du manchon élastique (9 ; 10), **en ce que** l'articulation (8) de l'extrémité supérieure (6b) du ressort (6) à la caisse (C) du véhicule comprend une entretoise (18) fixée entre une paroi longitudinale (P) de la caisse (C) et un flasque (F) de la caisse parallèle à 1a paroi longitudinale (P) par un boulon de fixation (19) traversant l'entretoise (18) sur laquelle est monté coaxialement le manchon élastique (10), le boulon de fixation (19) exerçant sur le manchon élastique (10) un effort axial comprimant les collerettes (10a, 10b) de celui-ci entre la paroi longitudinale (P), le flasque (F) de la caisse et les deux flasques (17) des deux bagues correspondantes (16), **en ce que** l'articulation (6a) de l'extrémité inférieure (7) du ressort (6) au bras associé (1) comprend une entretoise (13) fixée entre une face dressée longitudinale (1b1) du bras (1) et une rondelle (15) par un boulon de fixation (14) traversant l'entretoise (13) sur laquelle est monté coaxialement le manchon élastique correspondant (9), le boulon de fixation (14) exerçant sur le manchon élastique (9) un effort axial comprimant les collerettes (9a, 9b) de celui-ci entre la face dressée (1b1) la rondelle (15) et les deux flasques (12) des deux bagues correspondantes (11), et **en ce que** le manchon élastique (9 ; 10) de chaque articulation (7 ; 8) est solidaire, par exemple par adhérisation, de l'entretoise correspondante (13 ; 18) et des deux bagues correspondantes (11 ; 16) concentriques à l'entretoise (13 ; 18).

2. Essieu arrière selon la revendication 1, **caractérisé en ce que** chaque ressort (6) s'étend approximativement dans un plan vertical longitudinal du véhicule en étant traversé par la partie arrière (1b) du bras associé (1) inclinée par rapport à ce plan vertical

3. Essieu arrière selon la revendication 1 ou 2, **caractérisé en ce que** chaque ressort (6) est en matière synthétique composite.

## Patentansprüche

1. Hinterachse eines Kraftfahrzeugs, umfassend zwei gegenüberliegende Längsarme (1), die untereinander durch einen torsionsverformbaren Verbundlenker (4) und jeweils mit der Karosserie (C) des Fahrzeugs durch eine deutlich vertikale Aufhängungsfeder (6) verbunden sind, wobei jede Aufhängungsfeder aus einem elastischen Stab in C-Form (6) gebildet wird, dessen zwei untere (6a) und obere (6b) Enden direkt und jeweils auf zwei Artikulationen (7, 8) festgehalten werden, wobei jede zur mittleren Ebene der Aufhängungsfeder (6) eine senkrechte Achse und eine (7) mit dem zugeordneten Arm (1) und die andere (8) mit dem Gehäuse © fest verbunden ist, **dadurch gekennzeichnet, dass** jedes Ende (6a, 6b) der Aufhängungsfeder (6) derart nach außen von C gebogen ist, dass eine elastische Muffe (9, 10) teilweise umgeben wird, die auf der entsprechenden Artikulation (7, 8) angeordnet ist und insbesondere bei den vertikalen Ausfederungen der Karosserie (C) des Fahrzeugs eine Verformung in Torsion erfährt und bilateral durch zwei Flansche (12; 17) bzw. zwei Ringe (11; 16) festgehalten wird, die die entsprechende Muffe (9; 10) umgeben und ihrerseits axial durch Außenkragen (9a, 9b; 10a, 10b) der elastischen Muffe (9; 10) festgehalten werden, dass die Artikulation (8) des oberen Endes (6b) der Aufhängungsfeder (6) an der Karosserie (C) des Fahrzeugs ein Verbindungsrohr (18) umfasst, das zwischen einer Längswand (P) der Karosserie (C) und einem Flansch (F) des Gehäuses parallel zur Längswand (P) durch einen Befestigungsbolzen (19) befestigt ist, der das Verbindungsrohr (18) durchquert, auf dem koaxial die elastische Muffe (10) angebracht ist, wobei der Befestigungsbolzen (19) auf der elastischen Muffe (10) eine axiale Belastung ausübt, die die Kragen (10a, 10b) derselben zwischen der Längswand (P), den Flansch (F) des Gehäuses und die zwei Flansche (17) der zwei entsprechenden Ringe (16) zusammendrückt, dass die Artikulation (6a) des unteren Endes (7) der dem Arm (1) zugeordneten Aufhängungsfeder (6) ein Verbindungsrohr (13) umfasst, das zwischen einer länglich aufgerichteten Fläche (1b1) des Arms (1) und einer Unterlegscheibe (15) durch einen Befestigungsbolzen (14) befestigt ist, der das Verbindungsrohr (13) durchquert, auf dem koaxial die entsprechende elastische Muffe (9) angebracht ist, wobei der Befestigungsbolzen (14) auf die elastische Muffe (9) eine axiale Belastung ausübt, die die Kragen (9a, 9b) derselben zwischen der aufgerichteten Seite (1b1), der Unterlegscheibe (15) und den zwei Flanschen (12) der zwei entsprechenden Ringe (11) zusammendrückt und dass die elastische Muffe (9; 10) jeder Artikulation (7; 8) mit dem entsprechenden Verbindungsrohr (13; 18) und den zwei entsprechenden Ringen (11; 16), die konzentrisch zum Verbindungsrohr (13; 18) sind, fest verbunden ist, zum Beispiel durch Festkleben.

2. Hinterachse gemäß Anspruch 1, **dadurch gekennzeichnet, dass** jede Aufhängungsfeder (6) sich ungefähr in einer vertikalen Längsebene des Fahrzeugs erstreckt und dabei vom hinteren Teil (1b) des zugeordneten Arms (1) durchquert wird, der im Verhältnis zu dieser vertikalen Ebene geneigt ist.

3. Hinterachse gemäß Anspruch 1 oder 2, **dadurch gekennzeichnet, dass** jede Aufhängungsfeder (6) aus synthetischem Verbundmaterial besteht.

## Claims

1. Rear axle of a motor vehicle, comprising two opposite longitudinal arms (1) connected together by means of a tortionally deformable crossbeam (4) and each one to the vehicle body (C) by means of a substantially vertical spring (6), each spring being made of a C shaped elastic blade (6) the two lower (6a) and upper (6b) ends of which are directly and respectively maintained on two articulations (7, 8) each having an axis which is perpendicular to the mean plane of the spring (6) and integral, for one (7), with the associated arm (1) and, for the other (8), with the body (C), **characterized in that** each end (6a, 6b) of the spring (6) is curved towards the outside of the C in order to partially surround an elastic sleeve (9, 10) arranged on the corresponding articulation (7, 8) and undergoing a distorsion, in particular, in torsion upon vertical clearances of the vehicle body (C), and is bilaterally maintained by means of two flanges (12; 17) of two rings (11; 16, respectively, surrounding the corresponding elastic sleeve (9; 10) and being themselves axially maintained by end collars (9a, 9b; 10a, 10b) of the elastic sleeve (9; 10), and **in that** the articulation (8) of the upper end (6b) of the spring (6) to the vehicle body (C) comprises a brace (18) fixed between a longitudinal wall (P) of the body (C) and a flange (F) of the body parallel to the longitudinal wall (P) by means of a fixation bolt (19) passing through the brace (18) onto which the elastic sleeve (10) is coaxially mounted, the fixation bolt (19) exerting an axial stress onto the elastic sleeve (10) for compressing the collars (10a, 10b) thereof between the longitudinal wall (P), the flange (F) of the body and the two flanges (17) of the two corresponding rings (16), **in that** the articulation (6a) of the lower end (7) of the spring (6) to the associated arm (1) comprises a brace (13) fixed between a longitudinal straightened face (1b1) of the arm (1) and a washer (15) by means of a fixation bolt (14) passing through the brace (13) onto which the corresponding elastic sleeve (9) is coaxially mounted, the fixation bolt (14) exerting an axial stress onto the elastic sleeve (9) for compressing the collars (9a, 9b) thereof between the straightened face (1b1), the washer (15) and the two flanges (12) of the two corresponding rings (11), and **in that** the elastic sleeve (9; 10) of each articulation (7; 8) is rigidly connected, for example by adhering, to the corresponding brace (13; 18) and the two corresponding rings (11; 16) that are concentrical to the brace (13; 18).

2. Rear axle according to claim 1, **characterized in that** each spring (6) is extended approximatly in a longitudinal vertical plane of the vehicle by being passed through the rear portion (1b) of the associated arm (1) which is bent with respect to this vertical plan.

3. Rear axle according to claim 1 or 2, **characterized in that** each spring (6) is made of a composite synthetic material.
